# EUROPEAN PATENT APPLICATION

(11) **EP 4 685 888 A1**
(43) Date of publication of application: **28.01.2026**
(21) Application number: 24191024.9
(22) Date of filing: 25.07.2024
(51) Int. Cl.: H01M 8/04302, H01M 8/04303, H01M 8/04228, H01M 8/04223, H01M 8/04537

(54) **MANAGING OPERATION OF A FUEL CELL SYSTEM IN A FUEL CELL VEHICLE**

(71) Applicant: Volvo Truck Corporation, 405 08 Göteborg (SE)
(72) Inventor: Arya, Pranav, 412 85 Göteborg (SE); Blanc, Ricard, 431 68 Mölndal (SE)
(74) Representative: Valea AB

(57) **Abstract**

A system and method for controlling operation of a fuel cell system of a fuel cell vehicle are provided. The method comprises estimating an expected duration of a shutdown of the fuel cell system; determining a time until a next freeze preparation of the fuel cell system when a hydrogen protection time at the anode side is to be extended during the shutdown; in response to determining that the expected duration of the shutdown is shorter than the time until the freeze preparation, enabling a hydrogen refill at the anode side; and, in response to determining that the expected duration of the shutdown is longer than the time until the freeze preparation, and in response to determining that power produced by the fuel cell system during a cathode oxygen depletion to be performed after the freeze preparation cannot be supplied to at least one power consumer, disabling the hydrogen refill.

## Description

### TECHNICAL FIELD

The disclosure relates generally to operating a fuel cell system in a fuel cell vehicle. It further relates to a control system, the fuel cell vehicle, a computer program product, and a computer-readable medium.

The disclosure can be applied in heavy-duty vehicles, such as trucks, buses, and construction equipment.

### BACKGROUND

A fuel cell is an electro-chemical device that includes an electrolyte sandwiched between two electrodes such as an anode and a cathode. Solid polymer electrolyte fuel cells, which employ a proton exchange, solid polymer membrane electrolyte, electrochemically convert reactants - fuel such as hydrogen received at the anode or anode side, and oxidant such as oxygen or air received at the cathode or cathode side, to generate electric power. Multiple fuel cells are usually arranged together into a fuel cell stack, in order to provide a higher output voltage. One or more fuel cell stacks may form a fuel cell system. Proton exchange membrane (PEM) fuel cells are considered well suitable for vehicular applications, and electric vehicles employing PEM fuel cells are receiving increased attention due to the advantages of low or zero emissions.

In use, fuel cell systems, particularly in vehicles, may be subjected to relatively frequent starts and shutdowns. It is generally desirable to be able to reliably start a fuel cell system in a short period of time. At the same time, a fuel cell system suffers from degradation at each start-up, which negatively affects its performance and shortens a lifetime of the fuel cell system. Moreover, a risk of degradation increases with the increase in the length of a shutdown period. This can occur due to a so-called air-to-air start or start-up, also referred to as an air/air start-up, which happens when air or oxygen is present at the start of the fuel cell system both in the anode and in the cathode.

In order to avoid air accumulation on the anode side, the anode side may be pressurized with hydrogen at the time of shutdown which results in some protection against accumulation of air. However, there may be challenges related to adding hydrogen to the anode when the fuel cell system is not operational. For example, when there is hydrogen on the anode side and oxygen at the cathode side and no power is drawn from the fuel cell system, the fuel cell stack/cells may be at open circuit voltage which is damaging to the fuel cell stack. The open circuit voltage in this case may thus be defined as the maximum voltage produced by a fuel cell stack when oxidant and fuel are present in the fuel cell stack, and an electrical load is not attached to the fuel cell stack.

Various methods have been proposed to avoid an air-to-air start of a fuel cell system and/or to limit a number of air-to-air starts during a life of the fuel cell system. However, a need remains for improved methods for operating a fuel cell system in a way that reduces degradation of the fuel cell system, particularly due to an air-to-air start.

### SUMMARY

Aspects of the present disclosure relate to control of operation of a fuel cell system in a vehicle such that a hydrogen refill at an anode side of a fuel cell stack of the fuel cell system is performed when it is determined that a cathode oxygen depletion can be performed after a freeze preparation of the fuel cell system has been performed. If it is determined that the cathode oxygen depletion cannot be performed after the freeze preparation of the fuel cell system, a hydrogen refill is disabled or, in other words, not performed.

This advantageously reduces or avoids a risk of an air-to-air start condition upon a next start of the fuel cell and thus also ensures that hydrogen used for the hydrogen refill is not wasted. This also avoids an open circuit voltage condition at the fuel cell system and fuel cell stack, which condition is damaging to the fuel cell system and stack. In this way, the durability and performance of the fuel cell system are increased, and the overall lifetime of the fuel cell system is increased because a number of air-to-air starts is decreased.

According to an aspect of the disclosure, a method for controlling operation of a fuel cell system of a fuel cell vehicle is provided. The fuel cell system comprises a fuel cell stack comprising an anode side and a cathode side, and a hydrogen storage device configured to store hydrogen fuel supplied to the anode side of the fuel cell stack. The method comprises estimating an expected duration of a shutdown of the fuel cell system when the vehicle is shut down; in response to determining that a hydrogen protection time at the anode side is to be extended during the shutdown of the fuel cell system, determining a time until a next freeze preparation of the fuel cell system; in response to determining that the expected duration of the shutdown of the fuel cell system is shorter than the time until the freeze preparation, enabling a hydrogen refill at the anode side to extend the hydrogen protection time; and in response to determining that the expected duration of the shutdown of the fuel cell system is longer than the time until the freeze preparation, and further in response to determining that power produced by the fuel cell system during a cathode oxygen depletion to be performed after the freeze preparation cannot be supplied to at least one power consumer, disabling the hydrogen refill.

The at least one power consumer may comprise at least one internal or external power consuming device system. The at least one internal or external power consuming device or system may comprise one or more of an energy storage system (ESS) of the vehicle, a grid, and at least one auxiliary power consuming device of the vehicle.

The technical benefits include a reduced number of occurrences of air-to-air starts of a fuel cell system. In some examples, air-to-air starts are eliminated. The need and possibility to perform a hydrogen refill are evaluated in connection with evaluating conditions at the fuel cell system/stack that may take place after a freeze preparation of the fuel cell system is performed or to be performed. The technical benefits include ensuring that the hydrogen refill of the anode side of the fuel cell stack is performed when, after the freeze preparation, the fuel cell system and the fuel cell stack are in the condition that guarantees that hydrogen spent for the refill is not wasted. Also, the techniques herein reduce a risk of an open circuit voltage condition at the fuel cell stack, which may otherwise occur if a hydrogen refill is performed without beforehand depleting oxygen at the cathode side. Thus, the methods herein advantageously determine when the filling of the anode is permitted during or after a shutdown of the fuel cell system, to provide or extend the hydrogen protection time, based on the evaluation of the conditions available after the freeze preparation of the fuel cell system.

In some examples, the expected duration of the shutdown of the fuel cell system may be determined based on one or more of a presence of a person in the vehicle while the vehicle is shut down, a duration of a shutdown of the vehicle, current ambient conditions, ambient conditions during the expected duration of the shutdown of the fuel cell system, and historical data related to history of operation of the vehicle and the fuel cell system.

In some examples, the time until the next freeze preparation of the fuel cell system may be determined based on one or more of a duration of a shutdown of the vehicle, ambient conditions during the shutdown of the vehicle, a location of the vehicle, and properties of a thermal management system of the fuel cell system.

In some examples, the method further comprises, in response to determining that the expected duration of the shutdown of the fuel cell system is longer than the time until the freeze preparation and further in response to determining that power produced by the fuel cell system during the cathode oxygen depletion can be supplied to the at least one power consumer, enabling the hydrogen refill. Enabling the hydrogen refill or hydrogen refill operation may comprise instructing the fuel cell system to supply a certain amount of hydrogen from a hydrogen source, e.g. a hydrogen storage tank or another source, to the anode side of the fuel cell stack.

In some examples, the determining that the power produced by the fuel cell system during the cathode oxygen depletion at the cathode side can be supplied to the at least one power consumer comprises determining whether an energy storage system (ESS) of the vehicle is able to store the power produced by the fuel cell system during the cathode oxygen depletion; and in response to determining that the ESS is able to store the power produced by the fuel cell system during the cathode oxygen depletion, enabling the hydrogen refill. Thus, the hydrogen refill operation may be enabled to be performed when the ESS is able to store the certain amount of power that is to be produced by the fuel cell system during the cathode oxygen depletion.

In some examples, the method further comprises, in response to determining that the ESS is not able to store the power produced by the fuel cell system during the cathode oxygen depletion, determining whether the vehicle is coupled to the grid and can supply the power produced by the fuel cell system during the cathode oxygen depletion to the grid; and, in response to determining that the vehicle is coupled to the grid and can supply the power produced by the fuel cell system during the cathode oxygen depletion to the grid, enabling the hydrogen refill.

In some examples, the method further comprises, in response to determining that the vehicle is not coupled to the grid and/or cannot supply the power produced by the fuel cell system during the cathode oxygen depletion to the grid, determining whether the power produced by the fuel cell system during the cathode oxygen depletion can be supplied to a brake resistor or an auxiliary power consuming device of the vehicle; and, in response to determining that the power produced by the fuel cell system during the cathode oxygen depletion can be supplied to the brake resistor or the auxiliary power consuming device of the vehicle, enabling the hydrogen refill.

In some examples, the method further comprises determining, at least based on the expected duration of the shutdown of the fuel cell system, whether the hydrogen protection time is to be extended during the shutdown of the fuel cell system.

In some examples, the determining whether the hydrogen protection time is to be extended during the shutdown of the fuel cell system may be performed based on a comparison of an expected cost of an additional amount of hydrogen required for extending the hydrogen protection time and an expected cost of degradation of the fuel cell system due to a subsequent air-to-air start of the fuel cell system.

In some examples, the method further comprises determining that the hydrogen protection is not to be extended by determining that the expected cost of the additional amount of hydrogen is greater than the expected cost of degradation of the fuel cell system due to the subsequent air-to-air start of the fuel cell system.

According to an aspect of the disclosure, a control system configured to control a fuel cell system of a fuel cell vehicle is provided. The control system comprises processing circuitry, and the fuel cell system comprises a fuel cell stack comprising an anode side and a cathode side. The processing circuitry is configured to estimate an expected duration of a shutdown of the fuel cell system when the vehicle is shut down; in response to determining that a hydrogen protection time at the anode side is to be extended during the shutdown of the fuel cell system, determine a time until a next freeze preparation of the fuel cell system; in response to determining that the expected duration of the shutdown of the fuel cell system is shorter than the time until the freeze preparation, enable a hydrogen refill at the anode side to extend the hydrogen protection time; and in response to determining that the expected duration of the shutdown of the fuel cell system is longer than the time until the freeze preparation, and further in response to determining that power produced by the fuel cell system during a cathode oxygen depletion to be performed after the freeze preparation cannot be supplied to at least one power consumer, disabling the hydrogen refill. The at least one power consumer comprises one or more of an ESS of the vehicle, a grid, and a brake resistor or an auxiliary power consuming device of the vehicle.

The technical benefits of the control system may be the same or similar as those achieved by the method in accordance with any one or more examples of the present disclosure, as discussed above. Further, all embodiments of the control system are applicable to and combinable with all embodiments of the method according to the examples herein, and vice versa.

The processing circuitry of the control system is configured to perform the method in accordance with any one or more examples of the present disclosure.

According to an aspect of the disclosure, a fuel cell vehicle is provided that comprises the control system that is configured in accordance with any one or more examples of the present disclosure.

According to an aspect of the disclosure, a fuel cell vehicle is provided comprising the control system that is configured to perform the method in accordance with any one or more examples of the present disclosure.

According to an aspect of the disclosure, a fuel cell vehicle is provided that is in communication with the control system that is configured to perform the method in accordance with any one or more examples of the present disclosure.

The technical benefits of the fuel cell vehicle may be the same or similar as those achieved by the method in accordance with any one or more examples of the present disclosure, as discussed above. Further, all embodiments of the fuel cell vehicle are applicable to and combinable with all embodiments of the method according to the examples herein, and vice versa.

According to an aspect of the disclosure, a computer program product is provided that comprises computer-executable instructions, which, when executed by processing circuitry, cause the processing circuitry to perform the method in accordance with examples of the present disclosure.

The technical benefits of the computer program may be the same or similar as those achieved by the method in accordance with any one or more examples of the present disclosure, as discussed above. Further, all embodiments of the computer program are applicable to and combinable with all embodiments of the method according to the examples herein, and vice versa.

According to an aspect of the disclosure, a tangible computer-readable storage medium is provided. The computer-readable storage medium has stored thereon a computer program product comprising computer-executable instructions which, when executed by processing circuitry, cause the processing circuitry to perform the method in accordance with examples of the present disclosure.

The technical benefits of the computer-readable storage medium may be the same or similar as those achieved by the method in accordance with any one or more examples of the present disclosure, as discussed above. Further, all embodiments of the computer-readable storage medium are applicable to and combinable with all embodiments of the method according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** illustrates a side view of an example of a fuel cell vehicle in which a method in accordance with aspects of the present disclosure may be implemented.
**FIG. 2** is a block diagram illustrating in more detail some components of the fuel cell vehicle of FIG. 1, wherein the vehicle is shown to be coupled to a grid.
**FIG. 3A** is a flow chart illustrating a method for controlling operation of a fuel cell system of a fuel cell vehicle, in accordance with examples of the present disclosure.
**FIG. 3B** is a flow chart illustrating in more detail the method of FIG. 3A, in accordance with examples of the present disclosure.
**FIG. 4** is another flow chart illustrating an example of a process performed as part of the method of FIG. 3A, in accordance with examples of the present disclosure.
**FIG. 5** is a schematic diagram of a computer system for implementing examples in accordance with the present disclosure.

### DETAILED DESCRIPTION

Fuel cell systems suffer from degradation at each start-up, which presents serious concerns regarding using fuel cells safely and reliably in various applications, particularly in automotive applications. The risk of degradation is typically higher if a shutdown that preceded a start-up lasts longer, due to possible conditions that lead to an air-to-air start. An air-to-air start of a fuel cell system, which involves accumulation of air at the anode side of a fuel cell of the fuel cell system, may cause significant and irreversible damage to the fuel cell system. Existing approaches to mitigating such events include pressurizing the anode side with hydrogen at the time of a shutdown of the fuel cell system, which results in some protection against subsequent accumulation of air at the anode side. The time over which hydrogen is kept in the anode side, e.g. after switching off the fuel cell system, until there is air in both the anode side and in the cathode side of the fuel cell, is generally referred to as "hydrogen protection time". The hydrogen protection time lasts while there is hydrogen at the anode side, and the hydrogen protection time can be said to expire when air-to-air start conditions are created, i.e. conditions which would result in an air-to-air start upon a next start of the fuel cell system. The hydrogen protection time, if lasts until a next start of the fuel cell system, ensures a so-called hydrogen protected start, which refers to a situation when the fuel cell system is protected from an air-to-air start condition.

A hydrogen protection time can be extended by supplying hydrogen to the anode side while the fuel cell system is being shut down. This can be performed repeatedly and for a long time. However, if there is a freeze preparation that needs to be performed in the period when the fuel cell system is shutdown, the benefit of performing the hydrogen refill needs to be evaluated. Certain conditions need to be fulfilled to prevent an air-to-air start after the freeze preparation has been performed. Also, if these conditions are not fulfilled and a hydrogen refill is performed, this may cause the fuel cell system/stack to be at open circuit voltage for a long time which is damaging for the stack.

Examples of the present disclosure relate to techniques for evaluating if the conditions, for preventing an air-to-air start after freeze preparation is performed, can be provided. Thus, a control method is provided in accordance with examples of the present disclosure which comprises deciding when the hydrogen refill at the anode side is permitted during or after a shutdown of the fuel cell system, to provide or even extend the hydrogen protection time, i.e. a time for a future hydrogenprotected start, based on the evaluation of conditions available after the freeze preparation.

Conditions for hydrogen protected start are typically produced by consuming oxygen on the cathode side and pressurizing the anode side with hydrogen. This may be done at the time of shutdown of the fuel cell system, and the hydrogen protection time is prolonged by performing one or more hydrogen refill operations or refills e.g. at certain intervals. If the one or more hydrogen refills are not performed or if the oxygen is not consumed at the shutdown, this can lead to an air-to-air start which results into degradation of the fuel cell system.

Freeze preparation is done when the temperature of the fuel cell system is below a certain threshold. The freeze preparation may comprise purging the cathode side with air to flush out any water that may be left there and may also comprise purging the anode side with hydrogen, so as to avoid the water being left in the fuel cell system. In this way, the damage to the fuel cell system that may happen due to the expansion of water after freezing is prevented. However, the purging of the cathode side with air results in some oxygen remaining at the cathode side; therefore, a cathode oxygen depletion needs to be performed again to guarantee that there is hydrogen protection against the air-to-air start.

In conventional approaches, the freeze preparation and hydrogen refills are taken as independent tasks. However, the inventors have appreciated that some interdependency between these two operations need to be considered. In particular, if the freeze preparation is to be performed and afterwards the oxygen depletion cannot be performed, then hydrogen used for one or more refills is wasted, as the fuel cell system will in any case be in the condition that leads to an air-to-air start. Thus, the inventors have appreciated that, if the cathode oxygen depletion cannot be performed after the freeze preparation is performed, there is no need to perform a hydrogen refill which would be a waste of hydrogen in this case. If the hydrogen refill is performed close to the freeze preparation, i.e. shortly afterwards or before the freeze preparation, and if the oxygen depletion cannot be performed afterwards, this will result in situation where hydrogen is on the anode side and oxygen is on the cathode side; if no power is being drawn from the fuel cell system, this results in the cathode oxygen depletion system/fuel cells being at open circuit voltage where the risk of degradation of the fuel cell system is high.

Accordingly, the inventors have realized and appreciated that it is worthwhile to perform one or more hydrogen refills at the anode side if a cathode oxygen depletion can be performed after the freeze preparation. The fuel cell stack is configured to produce power without running the air compressor during the cathode oxygen depletion phase to consume all the remaining air/oxygen on the cathode side. The determining of whether the cathode oxygen depletion can be performed may involve determining whether the power that will be produced by the fuel cell system, more specifically by the fuel cell stack, can be absorbed by a power consuming device, such that an open circuit voltage condition that may damage the fuel cell stack is avoided.

Accordingly, a method for controlling operation of a fuel cell system of a fuel cell vehicle is provided. The fuel cell system comprises a fuel cell stack comprising an anode side and a cathode side, and a hydrogen storage device configured to store hydrogen fuel supplied to the anode side of the fuel cell stack. The method comprises estimating an expected duration of a shutdown of the fuel cell system when the vehicle is shut down; in response to determining that a hydrogen protection time at the anode side is to be extended during the shutdown of the fuel cell system, determining a time until a next freeze preparation of the fuel cell system; in response to determining that the expected duration of the shutdown of the fuel cell system is shorter than the time until the freeze preparation, enabling a hydrogen refill at the anode side to extend the hydrogen protection time; and in response to determining that the expected duration of the shutdown of the fuel cell system is longer than the time until the freeze preparation, and further in response to determining that power produced by the fuel cell system during a cathode oxygen depletion to be performed after the freeze preparation cannot be supplied to at least one power consumer such as e.g. an internal or external power consuming device or system, disabling the hydrogen refill. The at least one internal or external power consuming device or system comprises one or more of an energy storage system (ESS) of the vehicle, a grid, and at least one auxiliary power consuming device of the vehicle.

Also, a control system configured to control a fuel cell system of a fuel cell vehicle is provided. The control system comprises processing circuitry, and the fuel cell system comprises a fuel cell stack comprising an anode side and a cathode side. The processing circuitry of the control system is configured to estimate an expected duration of a shutdown of the fuel cell system when the vehicle is shut down; in response to determining that a hydrogen protection time at the anode side is to be extended during the shutdown of the fuel cell system, determine a time until a next freeze preparation of the fuel cell system; in response to determining that the expected duration of the shutdown of the fuel cell system is shorter than the time until the freeze preparation, enable a hydrogen refill at the anode side to extend the hydrogen protection time; and in response to determining that the expected duration of the shutdown of the fuel cell system is longer than the time until the freeze preparation, and further in response to determining that power produced by the fuel cell system during a cathode oxygen depletion to be performed after the freeze preparation cannot be supplied to at least one internal or external power consuming system, disabling the hydrogen refill, wherein the at least one internal or external power consuming system comprises one or more of an ESS of the vehicle, a grid, and a brake resistor or an auxiliary power consuming device of the vehicle.

A fuel cell electric vehicle (FCEV) is also provided that may comprise the control system configured to operate in accordance with examples of the present disclosure.

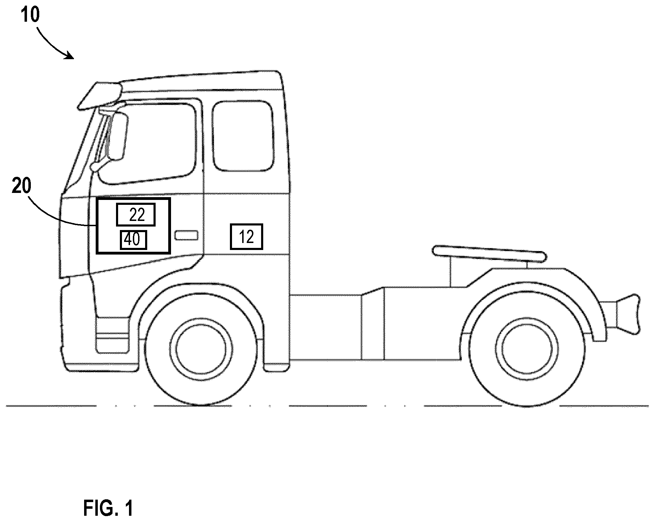

**FIG. 1** depicts a side view of a vehicle 10 according to an example of the present disclosure. The vehicle 10 is shown as a truck, such as a heavy-duty truck for towing one or more trailers (not shown). The vehicle 10 may be a FCEV or a hybrid vehicle comprising a fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles.

As shown schematically in FIG. 1, the vehicle 10 comprises a fuel cell system 20. The fuel cell system 20 may be used for powering one or more electric drive motors (not shown) which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering a power take-off (PTO) device that is a device that transfers an electric motor's mechanical power to another piece of equipment. The vehicle 10 may include or be coupled to or associated with one or more PTO devices.

The fuel cell system 20 comprises two or more fuel cells which together form a fuel cell stack 22 as shown in FIG. 1. The fuel cell system 20 is arranged to provide the fuel cells with necessary supply of hydrogen gas (H₂) and air, cooling, heating, etc., and the fuel cell system may include various components which are not shown herein. The fuel cell system 20 may comprise multiple fuel cell systems, and each fuel cell system may comprise its own control system, which may be communicatively connected to a controller or control system. The fuel cell system 20 may comprise a single fuel cell system, two fuel cell systems, or more than two fuel cell systems, such as three or more fuel cell systems. In some examples, the vehicle 10 comprises two fuel cell systems 20. Furthermore, when two or more fuel cell units or systems are provided, the fuel cell systems may be either independently controllable or commonly controllable. When independently controllable, each fuel cell system may be controlled to an on-state or an off-state regardless of the state(s) of the other fuel cell system(s). When two or more of the fuel cell systems are commonly controllable, those fuel cell systems are controllable in common to an on-state or an off-state, i.e., all fuel cell systems are controlled in common to the same state. Two fuel cell systems may in some cases be controlled in dependence on one another, such that one of the fuel cell systems is controlled to be in an on-state or an off-state in dependence on the state of the other fuel cell systems.

The vehicle 10 further comprises a controller or control system 40 according to an example of the present disclosure. The control system 40 may be e.g. an electronic control unit (ECU). The control system 40 may include a microprocessor, microcontroller, programmable digital signal processor or another programmable device. Thus, the control system 40 typically comprises electronic circuits and connections as well as processing circuitry such that the control system can communicate with different parts of the fuel cell system or any other components of the vehicle in order to provide the functions of the examples in accordance with aspects of the present disclosure. The processing circuitry may be a general purpose processor or a specific processor.

Even though an on-board control system 40 is shown, it shall be understood that the control system 40 may be a remote control system 40, i.e. an off-board control system, or a combination of an on-board and off-board control system or systems. In some examples, the control system 40 is an on-board system which is separate from the fuel cell system 20. The control system 40 may be configured to control the fuel cell system 20 by issuing control signals and by receiving status information relating to the fuel cell system 20. The control system 40 may be configured to receive information from various sensors, including one or more of temperature sensors, moisture sensors, and other sensors included in or associated with the fuel cell system 20 and/or the vehicle 10. For example, a temperature sensor may be positioned so as to measure a temperature of the fuel cell stack 22. A temperature sensor may be positioned such that it can measure an ambient temperature (i.e. a temperature outside and/or in the vicinity of the vehicle) that reflects a temperature to which the fuel cell system 20 is subjected. Various sensors may acquire measurements regarding internal operation of the fuel cell system 20.

The control system 40 may also be communicatively coupled to an internal database, an external database, or a combination thereof, to receive historical data related to driver's driving pattern, historical data on the vehicle operation e.g. locations traveled by the vehicle, frequency and locations of stops, historical data on ambient conditions, etc. The control system 40 may further receive data from a weather service which may include data on predicted weather conditions, and other types of data. The data on weather conditions, such as actual and/or predicted weather conditions, may include data on environmental conditions such as a vehicle current location, altitude, and wind speeds. Also, the control system 40 may be aware of a location in which the vehicle is stopped and characteristics of the location, such as e.g. whether the vehicle is parked indoors or outdoors. The control system 40 may also receive data from a global positioning system (GPS). The vehicle 10 may be equipped with a GPS device such as a GPS tracker, and the control system 40 may receive information related to a current location of the vehicle 10. The control system 40 may obtain information about traffic and other conditions related to the route traveled by the vehicle. The control system 40 may obtain data from various sources such as, e.g., one or more out of vehicle-to-everything (V2X) infrastructure, a vehicle-to-vehicle (V2V) infrastructure, a dedicated short range communication (DSRC), a vehicle controller area network (CAN), artificial intelligence (Al), Internet of Things (IoT), and combinations thereof. In some examples, the control system 40 may access data stored in a cloud storage.

The control system 40 may be an electronic control unit that comprises processing circuitry which is adapted to execute a computer program such as computer-executable instructions, to cause the control system 40 perform a method according to aspects of the present disclosure. The control system 40 may comprise hardware, firmware, and/or software for performing the method according to aspects of the present disclosure. The control system 40 may be denoted a computer. The control system 40 may be constituted by one or more separate sub-units, and the control system 40 may communicate by use of wired and/or wireless communication technology.

As shown in FIG. 1, the fuel cell vehicle 10 comprises a high-voltage system comprising an electrical storage system (ESS) 12 such as e.g. one or more rechargeable batteries for storing electric energy, including excess electric energy produced by the fuel cell system 20. The high-voltage system of the vehicle 10 may comprise other components. In some examples, the ESS 12 may comprise one or more batteries and/or one or more supercapacitors. The ESS 12 may store energy regenerated during braking such as regenerative braking, and/or it may be configured for charging by a charger, such as, e.g., from an external power grid. The ESS 12 is configured to assist the fuel cell system in supplying energy to the electric drive motor, to meet power/energy demands of the vehicle 10. The ESS 12 may be configured to provide additional propulsive power in situations when the complete required power cannot be provided by fuel cell system 20 or when it is not suitable to provide the complete required power by the fuel cell system 20. The fuel cell system 20 and the ESS 12 can provide power to one or more auxiliary systems of the vehicle 10.

The vehicle 10 also comprises various other components not shown in FIG. 1.

Although the present disclosure is described with respect to a vehicle such as a truck, aspects of the present disclosure are not restricted to this particular vehicle, but may also be used in other vehicles such as passenger cars, off-road vehicles, aircrafts and marine vehicles. The present disclosure may also be applied in vessels and in stationary applications, such as in grid-connected supplemental power generators or in grid-independent power generators.

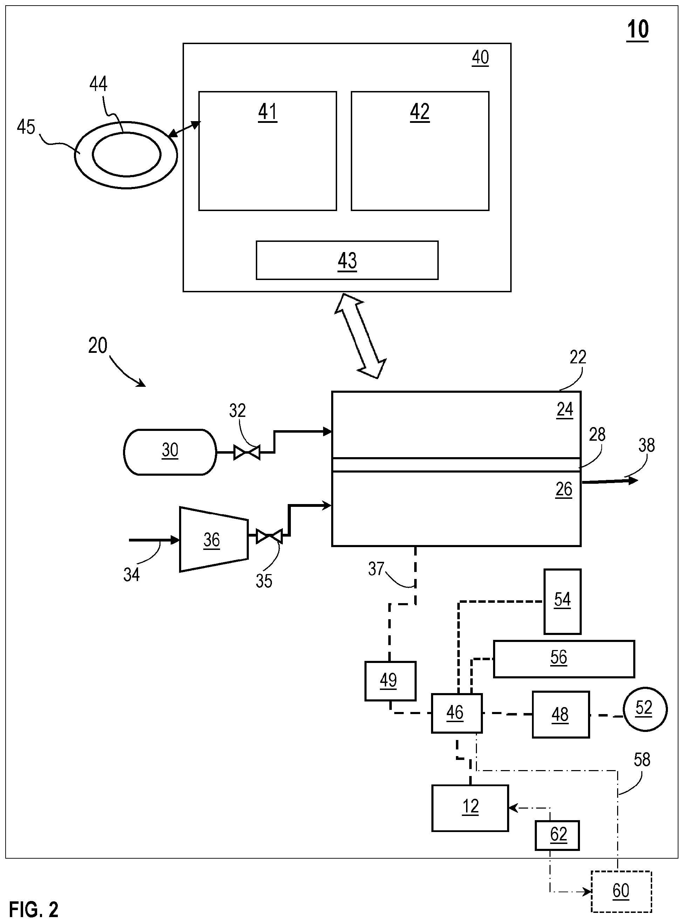

**FIG. 2** additionally illustrates an example of the fuel cell vehicle 10 comprising the fuel cell system 20. FIG. 2 illustrates an example of scenario in which the fuel cell vehicle 10 is coupled to a grid, for charging and/or for providing the energy or power to the grid.

As shown, the fuel cell system 20 comprises a fuel cell stack 22, formed by multiple fuel cells and comprising an anode or anode side 24, a cathode or cathode side 26, and an electrolyte 28 such as e.g. a proton exchange membrane (PEM) sandwiched between the anode side 24 and the cathode side 26. The anode side 24 receives fuel such as e.g. hydrogen gas that can be supplied from a hydrogen storage device 30 e.g. a hydrogen storage container or tank. The supply of hydrogen from the hydrogen storage device 30 may be controlled by an anode inlet valve 32 shown in FIG. 2 by way of example, or via another component. The anode inlet valve 32 may be e.g. a proportional valve or any type of valve. The control system 40 may control operation of the anode inlet valve 32 and/or other control component configured to be controlled to supply hydrogen from the hydrogen storage device 30 to the anode side 24.

The hydrogen is supplied to the anode side 24 during normal operation of the fuel cell system 20, i.e. when the fuel cell system 20 generates electrical energy. The hydrogen can also be supplied to the anode side 24 in a hydrogen refill operation when the fuel cell system 20 is not operating to generate electrical energy, to ensure that the anode side 24 has sufficient amount of hydrogen to prevent an occurrence of an air-to-air start condition upon a next start of the fuel cell system. Regardless of the specific way in which the control of hydrogen supply to the anode side 24 in a hydrogen refill operation is implemented, in aspects of the present disclosure, it is determined whether it is beneficial to perform one or more hydrogen refill operations. A hydrogen refill operation may be a first hydrogen refill operation that creates hydrogen protection and thus starts a hydrogen protection time. A hydrogen refill operation may be a subsequent hydrogen refill operation that extends or prolongs the hydrogen protection time. In examples herein, any hydrogen refill operation can be disabled if it is determined that a cathode oxygen depletion cannot be performed for subsequent freeze preparation.

In some implementations of the fuel cell system, the hydrogen refill operation, including a cathode oxygen depletion that enables hydrogen protection, may be an integrated part of the shutdown procedure. In such implementations, the first hydrogen refill operation and the cathode oxygen depletion may be performed at the shutdown; and the process in accordance with aspects and examples of the present disclosure is used to determine whether it is beneficial to perform a subsequent hydrogen refill operation when it is determined that a cathode oxygen depletion can be performed after freeze preparation.

The cathode side 26 receives air or oxygen from the ambient environment, as shown by an arrow 34. The ambient air may be filtered, and it is pressurized by an air compressor 36. The pressurized air may be humidified using a humidifier (not shown). The supply of oxygen or air from the ambient environment to the cathode side 26 may be controlled by a cathode inlet valve 35 shown in FIG. 2 by way of example, or via another control component. The cathode inlet valve 35 may be e.g. a proportional valve or any type of valve. The control system 40 may control operation of the cathode inlet valve 35 and/or other control component configured to be controlled to supply oxygen or air to the anode side 24. A freeze preparation, which may need to be performed when freezing conditions are predicted to be expected during the shutdown of the fuel cell system and/or at a time the fuel cell system is started up, may involve purging the cathode side 26 with air to remove any water which may have remained on the cathode side to minimize the risk of freezing. The freeze preparation may also include purging the anode side 24 with hydrogen to remove any water that may have remained at the anode side. The control system 40 may control operation of the cathode inlet valve 35 to control supply of air to the cathode side 26 as part of the cathode purging. The cathode inlet valve 35 may also be controlled to supply oxygen or air to the cathode 26 during normal operation of the fuel cell stack 22.

The control system 40 may control operation of the anode inlet valve 32 to supply hydrogen to the anode side 24 to purge the anode side 24 of any remaining water, as part of freeze preparation.

As also shown schematically in FIG. 2, the fuel cell system 20 may comprise at least one exhaust conduit 38 configured to carry away from the fuel cell stack 22 an exhaust flow such as byproducts of operation of the fuel cell stack 22.

As further shown schematically in FIG. 2, the electric power, labeled as 37, generated by the fuel cell stack 22 is supplied to a junction box or unit 46, such as a high-voltage junction box, through a converter 49 such as e.g. a DC/DC (direct current/direct current) converter that supplies the power at a required voltage. The power is supplied, via the junction unit 46, to an electric machine or motor 48 for propelling one or more sets of wheels 52 of the vehicle. The junction unit 46 is a component that serves as a communal meeting spot for electrical connections between the fuel cell stack 22, the ESS 12, the electric machine 48, a brake resistor 54, and one or more auxiliary power consuming devices, collectively labeled as 56, of the vehicle 10. The junction box 46 may also be configured to be connected to a grid 60 shown very schematically in FIG. 2 with a dotted box.

The power produced by the fuel cell stack 22 can be directed, via the junction unit 46, to various components. The power produced by the fuel cell stack 22 can be directed, via the junction unit 46, to the ESS 12 and/or the power can be sent to the grid 60. The power produced by the fuel cell stack 22 can also be directed, via the junction unit 46, to the brake resistor 54 and/or to the auxiliary power consuming device 56 such as, e.g., an air conditioning system or any other electrical consumers such as one or more pumps, one or more actuators and/or other electrical devices.

As shown in FIG. 2, the power produced by the fuel cell stack 22 can be supplied to the grid 60 via a connection shown by a dash-dotted line 58, through the junction box 46. The fuel cell system 20 can thus be configured to directly supply power to the grid, without having a need to charge the ESS, such as e.g. the battery, first. A power converter, e.g., a DC/DC converter, and/or other devices, may be deployed in the connection 58 between the fuel cell vehicle 10 and the grid 60, to provide power to the grid according to grid's requirements. In addition to the advantages provided by the methods and systems in accordance with the present disclosure, when additional power is supplied from the fuel cell vehicle 10 to the grid 60, energy efficiency of the fuel cell vehicle may advantageously be increased.

In some examples, the ESS 12, such as one or more batteries, can be chargeable from the grid 60. The ESS 12 may be coupled to the grid 60 via a charger 62 such as e.g. a bi-directional power conversion structure, or power stage, that is configured to charge the ESS 12 from the grid or discharge the ESS' stored energy back into the grid. The power generated by the fuel cell system 20 may in some be sent to the grid 60 via the ESS 12.

FIG. 2 also illustrates an example of a configuration of the control system 40. As shown, the control system 40 comprises processing circuitry 41 e.g. one or more processors, memory 42, and an input and output interface 43 configured to communicate with any necessary components and/or entities of examples herein. The input and output interface 43 may comprise a wireless and/or wired receiver and a wireless and/or wired transmitter. In some examples, the input and output interface 43 may comprise a wireless and/or wired transceiver. The control system 40 may use the input and output interface 43 to control and communicate with various sensors, actuators, subsystems, and/or interfaces of the fuel cell system 20 and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 41 of the control system 40, together with computer program code stored in a computer-readable storage medium for performing the functions and actions of the examples herein.

The memory 42 may comprise one or more memory units. The memory 42 comprises computer-executable instructions executable by the processing circuitry 41 of the control system 40. The memory 42 is configured to store, e.g., information, data, etc., and the computer-executable instructions to perform, when executed by the processing circuitry 41, the methods in accordance with examples herein. The control system 40 may additionally obtain information from an external memory.

The methods according to the aspects of the present disclosure may be implemented by e.g. a computer program product 44 or a computer program, comprising computer-executable instructions, i.e., software code portions, which, when executed by processing circuitry, e.g., the processing circuitry 41, cause the processing circuitry to perform the actions described herein, as performed by the control system 40.

In some examples, the computer program product 44 is stored on a tangible computer-readable storage medium 45. The computer-readable storage medium 45 may be, e.g., a disc, a universal serial bus (USB) stick, or similar device. The computer-readable storage medium 45, having stored thereon the computer program product, may comprise computer-executable instructions which, when executed by the processing circuitry 41, cause the processing circuitry to perform the actions of the methods in accordance with examples of the present disclosure described herein, as performed by the control system 40.

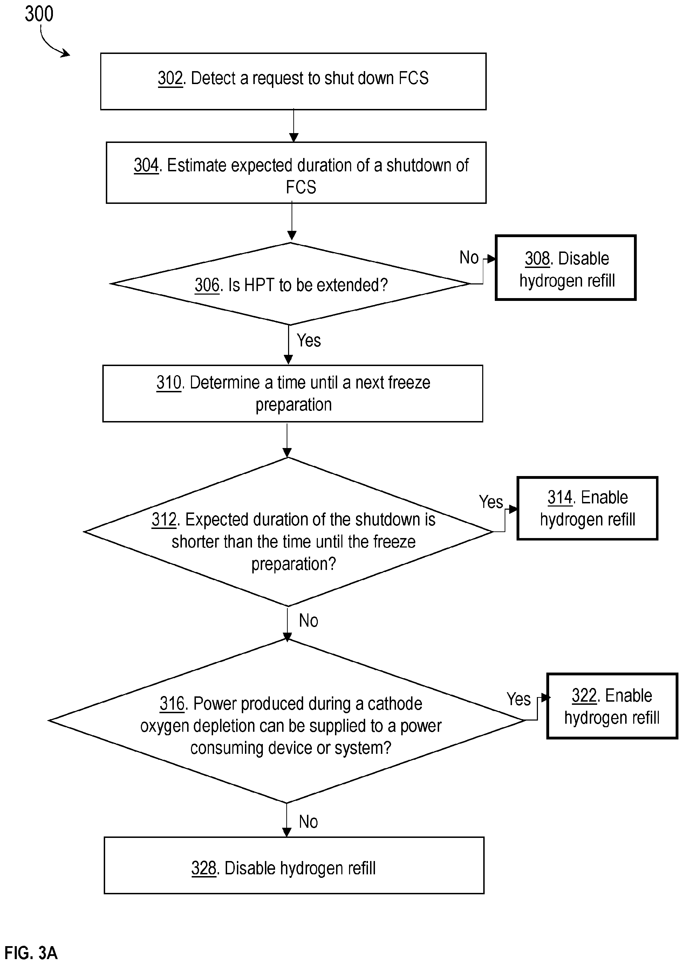

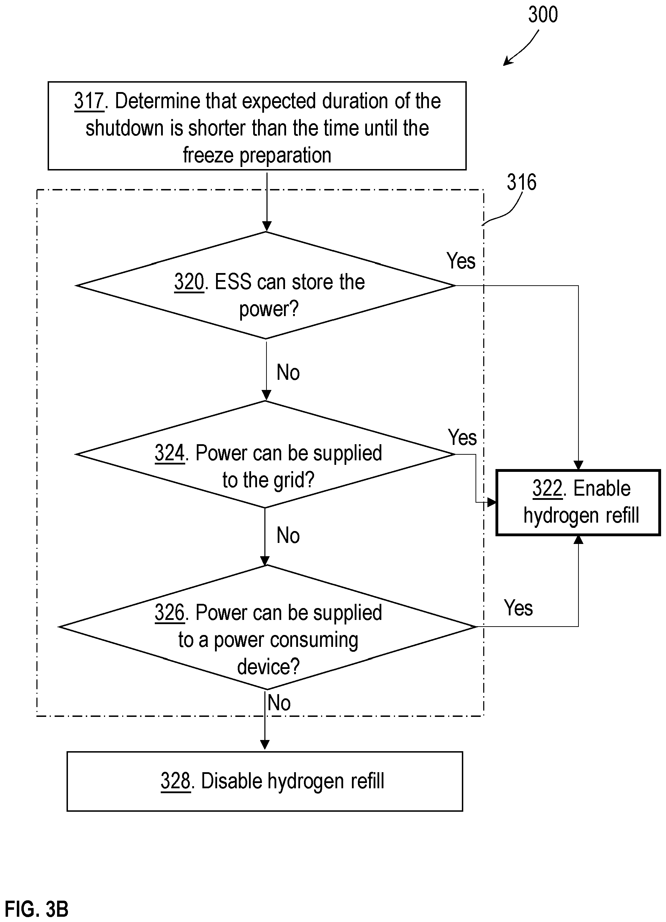

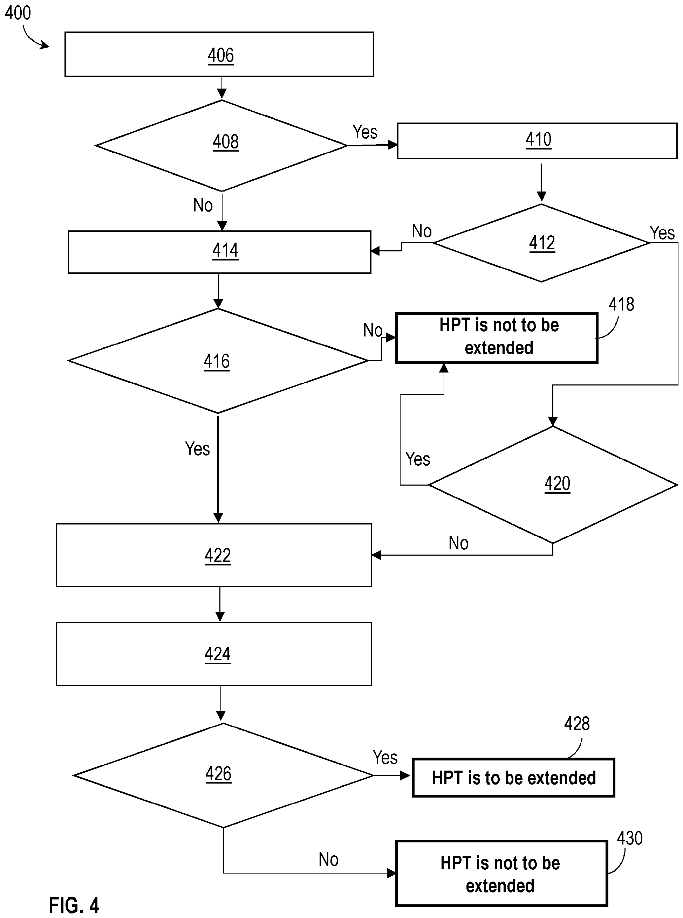

Those skilled in the art will appreciate that the control system 40, e.g., units thereof configured to perform the processing at blocks of FIGs. 3A, 3B, and 4, as discussed below, may refer to a combination of analogue and digital circuits. The one or more processors of the control system 40 are configured with software and/or firmware that, when executed by the respective one or more processors, may perform the methods in accordance with examples of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

**FIGs. 3A** and **3B** are flow charts illustrating a method 300 for controlling operation of a fuel cell system of a fuel cell vehicle such as fuel cell system 20 installed in vehicle 10, in accordance with examples of the present disclosure. The fuel cell system 20 comprises a fuel cell stack 22 comprising the anode side 24 and the cathode side 26, and the hydrogen storage device 30 for storing hydrogen supplied to the anode side 24 of the fuel cell stack 22. The fuel cell system 20 is configured to generate electrical power or energy through electrochemical reaction between hydrogen supplied to the anode side 24 and an oxidizing agent such as air or oxygen supplied to the cathode side 26. The method 300 may be performed by a control device or controller, such as e.g. control system 40 shown in FIGs. 1 and 2. Processing circuitry of the control system 40 may perform the process or method 300.

At **block 302,** the method 300 comprises detecting a request to shut down the fuel cell system. The request for a shutdown of the fuel cell system may be detected, received, or obtained, e.g., when the vehicle is keyed off or a similar input is received indicating that the vehicle has stopped, and the fuel cell system may be shut down. The request for the shutdown of the fuel cell system may be received, e.g., as input received from an operator such as e.g. a driver of the vehicle, or in another manner. The detection of the request for the shutdown of the fuel cell system may take place before the actual shutdown of the fuel cell system.

The request to shut down the fuel cell system may be received or detected before, simultaneously with, or after a time when the vehicle is shut down or stopped or parked. The actual fuel cell system shutdown may occur simultaneously with or after a time when the vehicle is shut down.

Shutting down the fuel cell system includes disconnecting the fuel cell stack from a load or electrical device, such as an electric drive motor for propelling the vehicle, the ESS such as a battery, and auxiliary devices consuming power generated by the fuel cell system, and stopping the flow of air into the cathode side. Other processes can be performed as part of the shutdown of the fuel cell system.

At **block 304,** the method 300 comprises estimating an expected duration of the shutdown of the fuel cell system when the vehicle is shut down. In other words, it is determined for how long the fuel cell system, once shut down, is estimated to be shut down, while the vehicle is parked or shut down. The fuel cell system can be shut down around the same time as the vehicle is shut down, such as after or at the same time as the vehicle is being shut down. In some cases, the fuel cell system can be shut down with a certain delay, e.g., from 10 minutes to 30 minutes, after the vehicle is shut down, though other delays are possible. The expected duration of the shutdown of the fuel cell system may be estimated from a time when the fuel cell system is shut down.

The expected duration of the shutdown of the fuel cell system may be estimated or determined or calculated based on driver input such as e.g. a departure time of the vehicle, and/or based on a location, historical data, whether the driver is sleeping in the vehicle, duration of the stopover, ambient conditions, and other factors.

In some examples, the expected duration of the shutdown of the fuel cell system may be determined based on one or more of a presence of a person in the vehicle while the vehicle is shut down, a duration of a shutdown of the vehicle, current ambient conditions, ambient conditions during the expected duration of the shutdown of the fuel cell system, and historical data related to history of operation of the vehicle and the fuel cell system.

Estimating or determining the expected duration of the shutdown of the fuel cell system may comprise determining a duration of the stopover of the vehicle. The duration of the vehicle's stopover may be defined as a time until a next start of the vehicle or a duration of time, from the time the vehicle is stopped, during which the vehicle is expected to remain to be stopped. The duration of the stopover may be estimated based on one or more out of a current location of the vehicle, historical data related to operation of the device and driver behaviour, and driver input. Various other factors may be used by the control system to estimate the duration of the stopover of the vehicle.

In some examples, the duration of the stopover of the vehicle is estimated using at least one of the driver input and historical data. Other data may also be used. In some examples, additionally or alternatively, the duration of the stopover of the vehicle is determined or estimated using information on a location of the vehicle e.g. the current location of the vehicle. In some examples, it may be known from prior use of the vehicle and/or driver history that the vehicle is typically parked for a certain duration of time at the current location. For example, from prior use of the vehicle and/or driver history, it may be known that the vehicle is typically parked overnight at the current location. Thus, depending on a current time, the control system may determine that the vehicle will be parked at the current location until the following morning or for any predetermined duration of time.

In some examples, the duration of the stopover of the vehicle may be determined using driver input, for example, an explicit driver input indicating the duration of the stopover of the vehicle. For example, the driver may indicate, via a vehicle input device, or via a driver's device such as a smartphone, or in any other way, the duration of the stopover of the vehicle e.g. in the form of a time of the next start of the vehicle or in another form or format.

In some examples, the driver may be instructed that the vehicle remains in the current location for a certain duration of time. This may be case, for example, when the current location is a mandatory stop location for the vehicle, according to regulations. In some examples, the duration of the vehicle stop may depend on a duration of time during which the driver has been driving up until the stop. If it is time for a mandatory break, i.e. rest, for the driver, the duration of the vehicle stop may be determined as a duration of the mandatory break.

Also, some unexpected circumstances may affect a duration of the stopover of the vehicle. For example, the vehicle may require repairs, or there may be weather-related delays. As another example, the control system may obtain information on traffic along a route planned for the vehicle and this information may be used to determine the duration of the stopover of the vehicle. The duration of the stopover of the vehicle may be determined in various other ways, and in dependence on various factors.

In some examples, the duration of the vehicle stopover may be determined before the request to shut down the fuel cell system is received. The request to shut down the fuel cell system may be received after the vehicle has stopped, and the duration of the vehicle stopover may be determined at a time or after the vehicle has stopped but before the request to shut down the fuel cell system is received. For example, in cases in which the duration of the vehicle stopover is determined based on a driver input, such input may be received at a time of or shortly after the vehicle stopping. Also, it may be known at the time the vehicle stops that, in the current location and/or a certain time of the day, the vehicle stops for a certain duration of time. The information obtained from the driver input may be used in combination with historical data on one or more of driver's behavior, locations of vehicle stops, permitted times for driver operating the vehicle without a stop, etc.

In some examples, the duration of the vehicle stopover may be determined after the request to shut down the fuel cell system is received and before the shutdown of the fuel cell system actually occurs.

At **block 306,** the method 300 comprises determining, at least based on the expected duration of the shutdown of the fuel cell system, whether a hydrogen protection time (HPT) is to be extended. It may be beneficial in some cases to extend the hydrogen protection time. The hydrogen protection time is defined as a period of time within which a restart of the fuel cell system is possible without provoking an air-to-air start. In other words, the hydrogen protection time indicates for how long, after a current time, a sufficient amount of hydrogen gas remains at the anode side of the fuel cell stack such that the fuel cell system is protected from a risk of an air-to-air start once the fuel cell system is restarted. The hydrogen protection time may be measured from a time when the request to shut down the fuel cell system is detected. The hydrogen protection time may also be measured from a time when a first or another most recent hydrogen refill was performed. For example, when more than one hydrogen refill is performed, it may be determined by how long a hydrogen protection time is extended by each subsequent refill. Accordingly, for each time instance during a time period when the fuel cell system is shut down, it may be estimated for how long an existing hydrogen protection time is expected to last.

In some examples, the determining at block 306 is performed based on a comparison of an expected cost of an additional amount of hydrogen required for extending the hydrogen protection time during the shutdown of the fuel cell system and an expected cost of degradation of the fuel cell system due to a subsequent air-to-air start of the fuel cell system which would occur if the hydrogen protection time were not extended.

The subsequent air-to-air start is a possible air-to-air start and its occurrence may be avoided. In some cases, it may be determined that an air-to-air start may be allowed to occur, i.e. if the hydrogen protection time is allowed to expire, if the cost of the degradation of the fuel cell system due to the air-to-air start does not exceed the cost of hydrogen that would be consumed to avoid the possible air-to-air start. Thus, the cost of hydrogen consumption may be balanced with what is acceptable as a degradation cost of the fuel cell system. This is performed to determine whether it is reasonable to perform one or more hydrogen refills and thus spend hydrogen gas, or whether, given the circumstances, it is more reasonable to abstain from performing a hydrogen refill and accept a risk of an air-to-air start.

The control system 40 may determine the expected cost of the additional amount of hydrogen that would be spent on one or more hydrogen refills in dependence on the required amount of the hydrogen, costs associated with hydrogen purchase, storage and/or other factors. The expected cost of the additional amount of hydrogen may be determined, e.g., based on a price at which the hydrogen was refueled last time, considering that the hydrogen prices vary. Depending on the price at which the fuel cell vehicle was refueled last time, it may be determined whether it is reasonable, in terms of costs, to perform a number of refills determined to be required to sufficiently extend the hydrogen protection time. The number of the required hydrogen refills will depend on the estimated duration of the stopover of the vehicle, such that a larger number of refills would be required for a longer stopover of the vehicle.

In some cases, the control system 40 may consider an amount of hydrogen currently in a hydrogen tank, e.g. hydrogen storage device 30 (FIG. 2), possibly in combination with a distance to a hydrogen refueling station or another hydrogen fuel source, in determining the expected cost of the additional amount of hydrogen required for hydrogen refills. For example, the vehicle may be stopped at a location that is far removed from a location of the closest hydrogen refueling station or another location where hydrogen can be acquired for refueling the vehicle, e.g., when the hydrogen tank(s) of the vehicle are replaceable and hydrogen may need to be delivered to the vehicle. In such cases, the control system may consider this factor as increasing the estimated cost of the additional amount of hydrogen, since hydrogen is also required for normal operation of the fuel cell system once the vehicle is started. In some examples, if the current amount of hydrogen in the vehicle hydrogen tank is below a certain threshold amount and if a distance to a hydrogen refueling station is greater than a certain threshold distance, the control system may determine, e.g. in combination with other factors such as the duration of the vehicle stopover, that the expected cost of the additional amount of hydrogen is higher than the expected cost of degradation of the fuel cell system.

The comparison of the expected cost of the additional amount of hydrogen and the expected cost of degradation of the fuel cell system considers a need to perform one or more subsequent hydrogen refills, along with the associated cost of the hydrogen, versus cost savings arising from preventing the degradation. In other words, it may be assessed how much is saved, in terms of costs, when one or more hydrogen refills are performed, as compared to a case when the one or more hydrogen refills are not performed and some degradation is permitted. Thus, the comparison is between the cost of degradation arising out of each air-to-air start, which is dependent on the cost of the fuel cell system, and the total cost of hydrogen that would be consumed if one or more refills are performed to prevent an air-to-air start.

In some examples, the cost of degradation of the fuel cell system may be defined as a cost of degradation of a state of health (SoH) of the fuel cell system. The SoH of the fuel cell system may be defined as a remaining lifetime of the fuel cell system. For example, the SoH may be expressed as percentage of the remaining lifetime of the fuel cell system. The cost of degradation of the fuel cell system may be expressed, e.g., as a decrease in a percentage of the remaining lifetime of the fuel cell system. The cost of degradation of the fuel cell system may be expressed in other ways.

The processing at block 306 may also depend on a state of health of the fuel cell system. For example, if the fuel cell system's state of health is close to 100%, it may be acceptable to allow for some degradation of the fuel cell system while saving a costs of hydrogen consumption. On the other hand, if the fuel cell system has a state of health that is below a threshold value e.g. 50%, a decision may be automatically to accept the costs of the consumption of the additional hydrogen while not further decreasing the state of health of the fuel cell system. In some examples, the opposite strategy may be taken, such that a cost of degradation of the fuel cell system may be higher when the fuel cell system's state of health is higher, e.g., 80% or above 80%.

In examples herein, when the number of hydrogen refills that are estimated to be required to fulfill the hydrogen protection time is above a certain threshold number of hydrogen refills, it may be determined that the expected cost of the amount of hydrogen exceeds the expected cost of degradation of the fuel cell system due to the subsequent air-to-air start of the fuel cell system. In such cases, preventing an air-to-air start, by one or more hydrogen refills and thus consuming hydrogen, may not be justified. In other words, the cost of the hydrogen consumption may be estimated to be excessively high, and a cost of degradation from the air-to-air start of the fuel cell system may be lower and may thus be acceptable. No hydrogen refills may thus be performed. For example, if the fuel cell vehicle is expected to be stopped for several days or a week, or longer, a cost of hydrogen estimated to be required for multiple hydrogen refills during such stopover, may exceed a cost of degradation to the fuel cell system from the air-to-air start of the fuel cell system.

In some cases, it may be determined whether the expected cost of the additional amount of hydrogen is lower than the expected cost of degradation of the fuel cell system due to the subsequent potential air-to-air start of the fuel cell system. In other words, the processing at block 306 determines whether the increased hydrogen consumption cost is smaller than the degradation cost due to the damaging art-to-art restart of the fuel cell system. If this is the case, i.e. the expected cost of the additional amount of hydrogen is lower than the expected cost of degradation of the fuel cell system due to the subsequent air-to-air start of the fuel cell system, it may be determined that the hydrogen protection time at the anode side is to be extended, and the process 300 may follow to block 310.

Responsive to determining that the expected cost of the additional amount of hydrogen is not smaller e.g. greater than the expected cost of degradation of the fuel cell system due to the subsequent air-to-air start of the fuel cell system, the control system determines that it is not beneficial to extend the hydrogen protection time such that that the hydrogen protection time is not to be extended. The process 300 may then follow to block 308.

In some examples, the determining whether it is beneficial to extend the hydrogen protection time may be performed as shown in the example of FIG. 4 discussed below.

At **block 308,** in response to determining that the hydrogen protection time at the anode side is not to be extended during the shutdown of the fuel cell system, the method 300 may comprise disabling a hydrogen refill. The disabling of the hydrogen refill may comprise not performing or not enabling a hydrogen refill.

At **block 310,** in response to determining that the hydrogen protection time at the anode side is to be extended during the shutdown of the fuel cell system, the method 300 comprises determining a time until a next freeze preparation of the fuel cell system. The time until the next freeze preparation, or the freeze preparation, is determined when it is beneficial to extend the hydrogen protection time at the anode side. The time until the next freeze preparation of the fuel cell system may be defined as a time until conditions occur which will require that the freeze preparation of the fuel cell system be performed to protect the fuel cell system from freezing conditions. The time until the next freeze preparation may be determined based on one or more of a duration of a shutdown of the vehicle, ambient conditions during the shutdown of the vehicle and predicted ambient condition, a location of the vehicle, properties of a thermal management system of the fuel cell system, and other factors.

Determining the time until the next freeze preparation may include determining a cooldown behavior of the fuel cell system. The cooldown behavior may define how fast the fuel cell system would cool down after it is shut down. The cooldown behavior of the fuel cell system can be estimated using a thermal model of the fuel cell system. The thermal model may be used to estimate how much heat the fuel cell system would lose as a function of different ambient temperatures, and to calculate when the temperature of the fuel cell system would go below a certain temperature threshold. Thus, the colder the ambient temperature, the faster the fuel cell system would cool down.

If the fuel cell system is expected to cool down faster after it is shut down, the freeze preparation may be performed sooner than in circumstances in which it may take longer for the fuel cell system to cool down. The freeze preparation may be performed once a temperature of the fuel cell system is below a certain threshold temperature. Various factors may determine when the temperature of the fuel cell system falls below the certain threshold temperature, including the cooldown behavior of the fuel cell system, actual and predicted ambient conditions, vehicle's location, and other factors.

When the vehicle is parked outside, the freeze preparation may be required sooner than in circumstances when the vehicle is parked inside e.g. in a garage or other environment in which temperatures are higher than an ambient temperature. As another factor, if the ambient conditions comprise freezing or below freezing ambient temperatures, and the vehicle is located outside, the next freeze preparation will be expected to be required sooner than in cases in which ambient temperatures are above freezing temperatures. The ambient temperatures that may be indicative of a freeze condition may be temperatures below 0 °C, or below -5 °C, or below -10 °C, or below -15 °C.

The fuel cell system may be instructed to wake up or be turned back on for performance of the freeze preparation. The freeze preparation may be defined as a suitable procedure or a set of procedures performed to prepare the fuel cell system to freezing conditions during shutdown of the fuel cell system, after the shutdown of the fuel cell system, and/or at a time of a next start-up of the fuel cell system. In some examples, e.g., when the ambient temperature reduces e.g. overnight as the vehicle is parked, the fuel cell system may be controlled to wake up to perform the freeze preparation.

In some examples, the freeze preparation may comprise performing a cathode purge to remove water from the cathode. This may be performed when the ambient temperature is low enough, e.g. at a freezing temperature or below the freezing temperature. The cathode purge may comprise instructing the air compressor e.g. air compressor 36 shown in FIG. 2 to pass the compressed air or oxygen through the cathode. In some examples, other gases may be used to remove water which may be accumulated at the cathode. Anode purging can also be included in the freeze preparation, to remove any water from the anode side of the fuel cell stack.

The time until the next freeze preparation of the fuel cell system may be measured from a time of shutting down the fuel cell system. The time until the next freeze preparation may be determined in minutes, hours, or other time units.

At **block 312,** it may be determined whether the expected duration of the shutdown of the fuel cell system is shorter than the time until the freeze preparation. In other words, it is determined whether the freeze preparation is expected to be performed before or after the expected duration of the shutdown of the fuel cell system expires.

At **block 314,** the method 300 comprises, in response to determining that the expected duration of the shutdown of the fuel cell system is shorter than the time until the freeze preparation, enabling a hydrogen refill at the anode side to extend the hydrogen protection time. Enabling the hydrogen refill may comprise controlling a suitable valve or other control mechanism, e.g., anode inlet valve 32 shown in FIG. 2, to allow a certain amount of hydrogen to be supplied to the anode. The control system 40 may control the anode inlet valve 32 or other control mechanism to perform one or more hydrogen refills.

At **block 316**, the method 300 may comprise, in response to determining that the expected duration of the shutdown of the fuel cell system is not shorter i.e. equal or longer than the time until the freeze preparation, determining whether power produced by the fuel cell system during a cathode oxygen depletion to be performed after the freeze preparation can be supplied to at least one power consumer such as an internal or external power consuming device or system. This is performed to determine whether the cathode oxygen depletion can be carried out to prevent the fuel cell system from being left at open circuit voltage for a certain period of time. The fuel cell system needs to produce certain amount of power in order to deplete the cathode side of the oxygen, and the method 300 determines at block 316 whether there is at least one internal or external power consuming system which can absorb or consume that power.

The determining at block 316 may comprise first determining whether the high-voltage system of the vehicle can allow it and/or whether the ESS can absorb the power produced by fuel cell system to deplete the cathode side. For example, in some cases, one or more other control units in the vehicle controlling the high-voltage system are not woken up. In such cases, the fuel cell system may not be allowed to connect to the high voltage system. In many cases, however, the fuel cell system depends on conditions and/or characteristics of the ESS. For example, the state of charge of the ESS may be excessively high or a temperature of cells of the ESS can be too low to allow charging of the ESS.

If the fuel cell system is allowed to connect to the high-voltage system in the vehicle and when the ESS can absorb the power produced by the fuel cell system, the hydrogen refill may be enabled.

If the ESS cannot absorb the power from the fuel cell system for cathode oxygen depletion, then a further check is made if the vehicle is connected to the grid and if the vehicle can supply the power generated from fuel cell system to the grid. If this is possible, the hydrogen refill is enabled.

If the vehicle is not connected to the grid or cannot supply power back to the grid, then a final check may be made to determine if the power produced from the fuel cell system can be dissipated by an energy consumer other than the ESS or by a braking device such as e.g. brake resistor. If it is possible to direct the power/energy to another energy consumer or power consuming device, the hydrogen refill is enabled. If it is determined that it is not possible to direct the power/energy to another energy consumer or power consuming device, the hydrogen refill is disabled.

At **block 322,** the method 300 comprises, in response to determining that the power produced by the fuel cell system during the cathode oxygen depletion, to be performed after the freeze preparation, can be supplied to the at least one internal or external power consuming system, enabling the hydrogen refill. Thus, when it is determined that the cathode oxygen depletion can be performed after the freeze preparation, the anode refill may be enabled.

The freeze preparation may include, once the temperature of the fuel cell system is below the certain threshold, operating the air compressor to flush the cathode with air, to remove or purge water from the fuel cell system. For example, with reference to FIG. 2, the control system 40 may control the cathode inlet valve 35 to operate so as to allow the pressurized oxygen or air to be supplied to the cathode side 26 of the fuel cell stack 22. The freeze preparation may include purging water from the anode side 24, by e.g. flushing the anode side 24 with hydrogen.

The air compressor may then be shut down. Once the air compressor is turned off, the fuel cell system needs to produce a certain amount of power to consume oxygen in the cathode side. This stage may be referred to as the oxygen depletion stage or phase, and the oxygen depletion is performed after the water has been purged during the freeze preparation and the air compressor has been turned off. The fuel cell system may be woken up when it is determined that it is time to perform freeze preparation. The oxygen depletion may thus involve restarting or turning back on the fuel cell system and running or operating the fuel cell system for a certain amount of time.

At **block 328,** the method 300 comprises, in response to determining that the power produced by the fuel cell system during the cathode oxygen depletion, to be performed after the freeze preparation, cannot be supplied to the at least one power consumer, disabling the hydrogen refill. Disabling the hydrogen refill may comprise not performing or not enabling any hydrogen refills.

In cases in which the fuel cell shutdown procedure includes a hydrogen refill, any subsequent hydrogen refill is disabled or in other words not enabled at block 328.

The power consumer may be at least one internal or external power consuming device or system such as one or more of an ESS of the vehicle, a grid, and a power consuming device of the vehicle other than the ESS. The power consuming device of the vehicle other than the ESS may be a brake resistor or another auxiliary device such as e.g. a cab climate system e.g. an air conditioning system. An auxiliary device of the vehicle may be defined as a device that is connected and powered by the engine, but not directly used for the propulsion of the vehicle.

**FIG. 3B** illustrates in more detail how the process 300 makes a decision regarding enabling or disabling the hydrogen refill of the anode side in dependence on whether or not the power produced by the fuel cell system during the cathode oxygen depletion can be supplied to at least one power consumer such as an internal or external power consuming device or system.

At **block 317,** the control system 40 may determine that the expected duration of the shutdown of the fuel cell system is shorter than the time until the freeze preparation. The processing at block 317 may be performed as part of processing at block 312 of FIG. 3A.

At decision **block 320,** the control system 40 may determine whether the ESS e.g. ESS 12 of the vehicle 10 is able to store the power produced by the fuel cell system during the cathode oxygen depletion. The control system 40 may estimate that a certain amount of power is expected to be produced by the fuel cell system during the cathode oxygen depletion. The control system 40 may determine, at block 320, whether a state of charge (SoC) of the ESS and the capacity of the ESS allow the ESS to absorb the amount of power that is expected to be produced by the fuel cell system during the cathode oxygen depletion. The SoC of the ESS may be compared to the amount of power that is expected to be produced by the fuel cell system during the cathode oxygen depletion.

In some examples, the ESS may be not fully charged and its SoC may be below a certain threshold SoC. If the SoC of the ESS is below the certain threshold SoC and the ESS' capacity allows the ESS to accept further charge, the control system may determine that the ESS is able to store the power produced by the fuel cell system during the cathode oxygen depletion. If the SoC of the ESS is above the threshold SoC, e.g., the ESS may not be able to accept further charge or it may not be able to accept the amount of power that is expected to be produced by the fuel cell system during the cathode oxygen depletion. Another condition which defines whether the ESS can be used, to store the power that would be produced by the fuel cell system during the cathode oxygen depletion, may be a temperature of cells forming the ESS. For example, if the cells of the ESS are overly cold i.e. below a certain temperature threshold, the ESS may not be charged.

Accordingly, in some examples, at block 320, the control system 40 may use one or more of a SoC of the ESS, the capacity of the ESS, and a temperature of the cell of the ESS to determine whether the ESS is able to absorb the amount of power that is expected to be produced by the fuel cell system during the cathode oxygen depletion.

Various other factors may additionally or alternatively be used to determine whether the additional power that would be produced by the fuel cell system e.g. by the air compressor during the oxygen depletion, to be performed after the freeze preparation, can be absorbed by the ESS.

In some examples, if the driver is sleeping in the cab of the vehicle, or if there are other equipment running, then the ESS would not be full and the power from cathode depletion may be directed to the ESS.

At **block 322**, similar to FIG. 3A, the method 300 comprises, in response to determining that the power produced by the fuel cell system during the cathode oxygen depletion can be supplied to the ESS, i.e. that the ESS can accept the power, enabling the hydrogen refill. Enabling the hydrogen refill or hydrogen refill operation may comprise instructing the fuel cell system to supply a certain amount of hydrogen from a hydrogen source, e.g. a hydrogen storage tank or another source, to the anode side of the fuel cell stack. An instruction or control signal may be sent to the fuel cell system instructing it to allow the certain amount of hydrogen be supplied from a hydrogen source to the anode side of the fuel cell stack.

At decision **block 324**, in response to determining that the power produced by the fuel cell system during the cathode oxygen depletion cannot be supplied to the ESS, e.g., when the SoC of the ESS is above the threshold SoC, the process 300 may determine whether the vehicle is coupled to the grid and can supply the power produced by the fuel cell system during the cathode oxygen depletion to the grid. For example, it may be determined, based on a current location of the vehicle and other factors, whether the vehicle is coupled or can be coupled to the grid to direct the additional power to the grid. For example, if the vehicle is at the charging station or at another location that can be connected to a power grid, and the vehicle is expected to be connected to the grid, it can be concluded that the power that is expected to be produced by the fuel cell system during the cathode oxygen depletion can be discharged to the grid. As shown in FIG. 2, the fuel cell vehicle 10 is configured to be coupled to the grid 60.

As shown in FIG. 3B, in response to determining that the vehicle is coupled to the grid and can supply the power produced by the fuel cell system during the cathode oxygen depletion to the grid, the method 300 may proceed to block 322 where the hydrogen refill is enabled.

At decision **block 326,** the method 300 comprises, in response to determining that the vehicle is not coupled to the grid and/or cannot supply the power produced by the fuel cell system during the cathode oxygen depletion to the grid, determining whether the power produced by the fuel cell system during the cathode oxygen depletion can be supplied to the power consuming device of the vehicle other than the ESS. The power consuming device of the vehicle other than the ESS may be a brake resistor e.g. brake resistor 54 shown in FIG. 2. In some examples, the power consuming device of the vehicle other than the ESS may be an auxiliary power consuming system or device 56 such as e.g. a cab climate system e.g. an air conditioning system, one or more pumps, actuators, and other devices or systems in the vehicle. The air conditioning system or another auxiliary system may be operated even if the driver is not sleeping or present in the cab. The energy used to run such a system may be a waste, but it still may be necessary to use this energy at this time.

In response to determining that the power produced by the fuel cell system during the cathode oxygen depletion can be supplied to the brake resistor and/or the auxiliary power consuming device, such as a power consuming device of the vehicle other than the ESS, the method 300 proceeds to block 322 to enable the hydrogen refill.

Alternatively, in response to determining that the power produced by the fuel cell system during the cathode oxygen depletion to be performed after the freeze preparation cannot be supplied to either of the ESS of the vehicle, the grid, the brake resistor, or the auxiliary power consuming device of the vehicle other than the ESS, the method 300 follows to block 328, also shown in FIG. 3A, where the hydrogen refill is disabled. Thus, if it is determined that the power, which would be produced by the fuel cell system during the cathode oxygen depletion, cannot be directed to the at least one internal or external power consuming system, such that the cathode oxygen depletion cannot be performed, and a hydrogen refill is not performed. In examples herein, if the cathode oxygen depletion cannot be performed after the freeze preparation of the fuel cell system, a hydrogen refill is not performed.

The processing at blocks 320, 324, and 326 may be performed as part of the processing at block 316 of FIG. 3A.

It should be appreciated that the processing at blocks 324 and 326 can be performed in the order different from that shown in FIG. 3B. Thus, it may be determined, as shown for block 326, whether the power produced by the fuel cell system during the cathode oxygen depletion can be supplied to the power consuming device of the vehicle other than the ESS. If this is not the case, it may then be determined, as shown for block 324, whether the vehicle is coupled to the grid and can supply the power produced by the fuel cell system during the cathode oxygen depletion to the grid.

In examples herein, a first and subsequent hydrogen refill operations may be disabled if a cathode oxygen depletion cannot be performed after a freeze preparation, as determined using the method described herein.

In some examples, a fuel cell system shutdown procedure may include a first hydrogen refill operation and/or some limited natural hydrogen protection may take place.

**FIG. 4** illustrates an example of a process or method 400 which can be performed to determine whether it is beneficial to extend the hydrogen protection time at the anode side, with reference to block 306 of FIG. 3A. The method may be performed in cases when a first hydrogen refill may be performed as part of the fuel cell system shutdown procedure.

At **block 406,** the method 400 comprises estimating a hydrogen protection time due to a hydrogen refill operation comprising supplying the hydrogen to the anode side of the fuel cell stack from the hydrogen storage device. In some examples, the first hydrogen refill, may be performed as part of the fuel cell system shutdown procedure. Thus, the anode side of the fuel cell stack may be pressurized with hydrogen gas and the hydrogen protection time may be created as a result of the first hydrogen refill operation.

Estimating the hydrogen protection time may comprise estimating one or more of a hydrogen protection time that occurs naturally i.e. when no hydrogen refill is performed, the hydrogen protection time that is due to the first hydrogen refill, and a hydrogen protection time that involves increasing or extending an existing hydrogen protection time by each subsequent refill. All three of these types of the hydrogen protection time may be estimated and used to determine whether or not to perform one or more hydrogen refills during the stopover of the vehicle, as discussed below. Accordingly, in addition to estimating the hydrogen protection time due to the first hydrogen refill operation, one or both the so-called natural hydrogen protection time and the hydrogen protection time due to, or created by, one or more subsequent hydrogen refills may be estimated.

The natural hydrogen protection time without any refill, i.e. neither a first refill or a subsequent refill, may be very short or close to zero. This can occur in a normal, i.e. not emergency, shutdown of the fuel cell system. In some cases, some hydrogen may remain at the anode side upon a shutdown of the fuel cell system, and it may provide some limited protection from an air-to-air start. In some cases, there may be no hydrogen in the anode side at the fuel cell system shutdown that would be sufficient to provide hydrogen protection from a potential air-to-air start.

The hydrogen protection time created by the initial or first hydrogen refill may or may not be followed by one or more subsequent hydrogen refills. The hydrogen protection time created by the first refill may be estimated by taking into account the natural hydrogen protection time that, if any, may exist upon the shutdown of the fuel cell system.

The first hydrogen refill may be performed as part of the shutdown procedure, as the fuel cell system is being shut down.

The hydrogen protection time due to, or created by, the first refill may be extended or prolonged by one or more subsequent hydrogen refills. There may be multiple refills, e.g., refills may be controlled to occur at certain time intervals, to ensure that the hydrogen protection time does not expire during the shutdown of the fuel cell system. In some examples, the estimation of the hydrogen protection time involves estimating or determining an additional time which may be added to the hydrogen protection time created by the first refill, to extend this hydrogen protection time, by each subsequent hydrogen refill. In other words, it may be determined to what extent a hydrogen refill would prolong the hydrogen protection time created by one, i.e. the first refill. In some examples, the additional time may be similar for each subsequent refill, such that each subsequent refill is expected to extend a current hydrogen protection time by a similar amount of time unless ambient conditions change sufficiently to affect this. Thus, it may be estimated by how much a hydrogen protection is extended by each refill and by all of the one or more refills that may be performed.

In some cases, a subsequent refill may extend a current hydrogen protection time, e.g. created due to the first refill or due to the first refill plus one or more subsequent refills, by an amount of time that is smaller than a duration of the hydrogen protection created by the first refill.

A hydrogen refill operation increases the hydrogen gas concentration on the anode side and thus extends the hydrogen protection time. The hydrogen protection time depends on environmental conditions such as a vehicle current location, actual and predicted ambient conditions at the current location such as a temperature, altitude, wind speed, etc. For example, the hydrogen protection time may depend on whether the vehicle is parked indoors or outdoors. As another factor, the hydrogen protection time may depend on a configuration of the fuel cell system. As hydrogen at the anode side of the fuel cell stack of the fuel cell system dissipates with time, the remaining duration of the hydrogen protection time decreases.

An amount of hydrogen that is supplied from a hydrogen storage device, e.g., hydrogen storage device 30, to the anode side of the fuel cell system at each refill, may be predetermined, e.g., based on a type and/or configuration of the fuel cell system. Accordingly, in some examples, the control system 40 may be preconfigured with information on the amount of hydrogen that is to be delivered to the fuel cell system via the first refill and any of one or more subsequent refills.

In some examples, the hydrogen protection time is estimated using at least current and predicted ambient conditions. In some examples, the hydrogen protection time depends on environmental conditions such as a vehicle current location, ambient conditions at the current location such as an ambient temperature, altitude, wind speed, etc. The ambient temperature may be actual and/or predicted ambient temperature. The hydrogen protection time may depend on whether the vehicle is parked indoors or outdoors.

In some examples, estimating the hydrogen protection time includes using a multiplier M2, to account for inaccuracies in the estimation of hydrogen protection start time. A value of the estimated hydrogen protection time may be multiplied by a value of M2. In some examples, the value of the multiplier M2 may vary in a range of from 0.9 to 1.1, where a value of the multiplier M2 that is closer or equal to 1 is indicative of a greater confidence in the estimation of the hydrogen protection time. As an example, M2 of 0.9 or close to 0.9 would be used when a shorter duration of the hydrogen protection time than an actual hydrogen protection time is considered, and M2 of 1.1 or close to 1.1 would be used when a longer duration of the hydrogen protection time than the actual hydrogen protection time is considered. The multiplier M2 may be used, e.g., in cases were, based on historical data, the hydrogen protection time was underestimated. In an example, the multiplier M2 having a value of greater than 1, e.g. closer to 1.1, may be used as a margin, taken in a case when the hydrogen protection time expires later than it was estimated. The multiplier M2 is independent of a value and use of the multiplier M1, which may be used in some examples to account for inaccuracies in the estimation of the duration of the stopover of the vehicle.

At decision **block 408**, the process 400 comprises determining whether a driver of the vehicle is present or expected to be present in the vehicle during the vehicle's stopover for a certain time period. In other words, one or both an actual driver presence and an expected driver presence may be determined or estimated. In some examples, determining or estimating whether the driver of the vehicle is expected to be present in the vehicle, during the stopover, for the certain time period, comprises determining whether the driver is expected to be sleeping or living in the vehicle for the certain time period. For example, responsive to detecting that the driver is present in a cabin of the vehicle during nighttime after a certain time has passed since the vehicle had stopped, it may be determined that the driver is sleeping in the vehicle.

The presence of the driver in the vehicle may indicate that the driver is using the vehicle, for purposes other than driving, during the stopover. For example, the driver of a taxi or a long-distance truck may be sleeping in the vehicle during rest periods. The driver may also occupy the vehicle during a work break. In some examples, it may be detected whether the driver is sleeping in the vehicle, e.g., using motion, temperature and other sensors that are configured to monitor driver's status. One or more auxiliary devices may be turned on when the driver is present in the vehicle, e.g., one or more out of an air conditioner, a heater, etc.

The processing at block 408 may be performed, entirely or in part, at a time when the vehicle has stopped or after the vehicle has stopped but before the fuel cell system is shut down. In some cases, the processing may be performed after the request for the shutdown of the fuel cell system is received and before the fuel cell system is shut down.

In some examples, the determining at block 408 may be performed based on a driver input - e.g., the driver may expressly indicate the driver's intent to remain in the vehicle for the certain time period. For example, as the vehicle stops, a driver input may be received that is indicating whether it is expected that the driver will be sleeping in the vehicle during the vehicle stopover. The input may be received by the control system from the driver via an application or an app executed on a driver's personal device, via a vehicle's console, or in another manner. In some examples, the driver input may be received via a Human-Machine Interface (HMI) in the cabin of the vehicle. Data that can be used to determine whether the driver of the vehicle is present in the vehicle, such as e.g. one or more of sensor data and driver's input, may be used to generate an indication to the control system. Furthermore, in some examples, determining whether the driver is expected to be present in the vehicle during the stopover for the certain time period may be determined in part or entirely based on historical data on the driver behavior which may include e.g. data on locations at which the driver is typically sleeping or living in the vehicle or is present in the vehicle for another reason during the vehicle stopover. In some examples, the historical data may be used in combination with data from the driver's input, and/or along with other information.

It should be noted that it may not be required that the driver be actually asleep, but a certain position of the driver and/or other data which may be acquired by one or more sensors may be used to determine that the driver is present in the vehicle for a certain time period. In some examples, a certain time period is a period of time that is longer than a threshold time period, and the determining at block 408 involves determining whether the driver of the vehicle is present in the vehicle during the stopover for a certain time period that is longer than threshold time period. Thus, for example, if the driver enters the vehicle for a short time period, it may not be determined that the driver is present in the vehicle for the purposes of the process 400, since the determining at block 408 is performed to further determine whether the fuel cell system may need to be operational during the stopover. Furthermore, the determining that the driver is present in the vehicle, e.g. living or sleeping in the vehicle, accounts for the possibility that the driver may exit the vehicle for short durations of time during the certain time period at which the driver is determined to be present in the vehicle. As used herein, short durations of time may be durations that are shorter than the entire time period during which the driver is determined to be present in the vehicle.

In addition, it should be appreciated that, even though the present description refers to the driver of the vehicle, a person other than a driver may be present in the vehicle for the certain time period. Thus, the processing at block 408 relates to any person that is referred to herein by way of example as a driver of the vehicle.

At **block 410,** responsive to determining, at decision block 408, that the driver of the vehicle is present or expected to be present in the vehicle during the stopover for the certain time period, the process 400 comprises determining power needs of the vehicle during the stopover of the vehicle. The vehicle power needs, also interchangeably referred to herein as power/energy needs, during the stopover, with the driver present in the vehicle, may include power/energy requirements of auxiliary electrical devices maintaining environment in the vehicle suitable for the driver's presence, e.g. one or more out of an air conditioning and/or heating system, interior lighting system, a refrigerator, a microwave or another type of oven, etc. In some examples, the power needs of the vehicle during the stopover are determined or estimated based on one or more of ambient conditions, the duration of the vehicle stopover, information on auxiliary electrical devices that are turned on, historical data on use of auxiliary electrical devices of the vehicle including during vehicle stopovers, etc. The ambient conditions, such as e.g. current and/or predicted temperature, humidity, wind speed and direction, etc. may affect the determining of the power needs of the vehicle during the stopover. For example, depending on the outside temperature, the interior of the vehicle may need to be heated or cooled. A number, type, and power requirements of auxiliary electrical devices that are currently used or predicted to be used, e.g. based on their historical use, will influence the amount of power that is required by the vehicle during the stopover when the driver or other person is present in the vehicle.

At decision **block 412,** the process 400 comprises determining whether the fuel cell system is to be restarted during the stopover to meet the determined power needs of the fuel cell vehicle during the stopover of the vehicle. The fuel cell system may be restarted while the vehicle is still in the stopover mode, i.e. is parked. In some examples, determining whether the fuel cell system is to be restarted during the stopover comprises determining whether an electric energy storage of the vehicle, e.g. ESS 12 (FIG. 1), is capable of fulfilling the determined power needs of the fuel cell vehicle during the stopover of the vehicle. The determined power needs of the fuel cell vehicle may be greater than what the ESS of the vehicle may provide. Thus, the fuel cell system may need to be restarted i.e. turned on during the stopover, to allow the power needs of the vehicle during the stopover to be met.

At **block 414**, responsive to determining, at decision block 408, that the driver of the vehicle is not present and is not expected to be present in the vehicle during the stopover for the certain time period, the control system may compare the estimated duration of the stopover of the vehicle to the hydrogen protection time. In some examples, the comparison involves comparing the estimated duration of the stopover of the vehicle with the hydrogen protection time that is created due to or by the first hydrogen refill. This hydrogen protection time may take into account a hydrogen protection time that may be provided by hydrogen that remains at the anode side at the fuel cell system shutdown, i.e. what is referred to herein as a natural hydrogen protection time that may exist without any, including the initial one, refills. Such hydrogen protection time may be very short or, in some cases, close to zero, such that no hydrogen protection may be provided without hydrogen refills.

As shown in FIG. 4, responsive to determining, at decision block 412, that the fuel cell system is not to be restarted to meet the determined power needs of the fuel cell vehicle during the vehicle stopover, the process 400 similarly follows to block 414 where the estimated duration of the stopover of the vehicle is compared to the hydrogen protection time due to the first hydrogen refill.

In some cases, the duration of the vehicle stopover is longer than the hydrogen protection time provided by the first hydrogen refill, such that the hydrogen protection time provided by the first hydrogen refill expires before the stopover is finished i.e. before the fuel cell system is restarted. In such cases, it is possible that one or more hydrogen refills may be required, to avoid the fuel cell system being at risk of an air-to-air start.

In some cases, the duration of the vehicle stopover is shorter than the hydrogen protection time due to the first hydrogen refill, and a hydrogen refill may therefore not be required since the fuel cell system is considered to be protected from an air-to-air start during the entire stopover period. Thus, only the initial or first hydrogen refill is performed, at the shutdown of the fuel cell system, to create hydrogen protection and start the hydrogen protection time. The first hydrogen refill may be performed as part of performing the fuel cell system shutdown. The fuel cell system is expected to be (re)started before the hydrogen protection time created by the first hydrogen refill expires.

At **block 416**, the process 400 comprises determining whether the duration of the stopover of the vehicle is longer than the hydrogen protection time due to, or created by, the first hydrogen refill.

At **block 418**, responsive to determining at decision block 416 that the duration of the stopover of the vehicle is not longer, i.e. equal to or shorter than the hydrogen protection time created by the first hydrogen refill, the process 400 comprises determining that the hydrogen protection time is not to be extended i.e. that it is not beneficial to extend the hydrogen protection time. The decision made at block 418 that it is not beneficial to extend the hydrogen protection time may comprise determining, at decision block 306 of FIG. 3A, that the hydrogen protection time is not to be extended, upon which the process 300 follows to block 308 as shown in FIG. 3A.

Referring back to decision block 412, responsive to determining that the fuel cell system is to be restarted to meet the determined power needs of the fuel cell vehicle during the vehicle stopover, the control system determines, at decision **block 420,** whether a restart of the fuel cell system during the stopover is expected before an expiration of the hydrogen protection time due to the first hydrogen refill. The restart of the fuel cell system may occur while the vehicle is still parked and is in the stopover mode.

Responsive to determining, at decision block 420, that the restart of the fuel cell system during the stopover is expected before the expiration of the hydrogen protection time due to the first hydrogen refill operation, the process 400 follows to block 418 where the decision is made not to extend the hydrogen protection time and thus to disable a hydrogen refill operation.

At **block 422,** responsive to determining, at decision block 420, that the restart of the fuel cell system during the stopover is not expected after the expiration of the hydrogen protection time created by the first hydrogen refill operation, the process 400 comprises estimating an additional amount of hydrogen required to increase the hydrogen protection time created by the first hydrogen refill operation. The additional amount of hydrogen is an amount of hydrogen that would be spent on one or more subsequent hydrogen refills, after the first hydrogen refill.

Hydrogen delivered to the anode side of the fuel cell stack of the fuel cell system dissipates with time, by reacting with oxygen and/or due to leakage. Because the hydrogen protection time created by the first hydrogen refill operation is expected to expire before the fuel cell system is to be restarted next, the hydrogen protection time due to the first hydrogen refill needs to be increased or extended. Thus, the hydrogen consumption required to fulfill the increased hydrogen protection time, for the vehicle stopover duration, may be estimated. The amount of hydrogen required to fulfill the increased hydrogen protection time comprises an amount of hydrogen that would be spent on one or more subsequent hydrogen refills, after the first hydrogen refill.

As also shown in FIG. 4, the process 400 follows to block 422 from block 416, responsive to determining that the duration of the stopover of the vehicle is greater or longer than the hydrogen protection time created by the first hydrogen refill. At block 422, the additional amount of hydrogen required to increase the hydrogen protection time may be estimated based on a configuration of the fuel cell system and other factors such as, e.g. a volume of the anode side, a maximum hydrogen pressure in the anode side, a number of fuel cell stacks, a number of fuel cell systems, etc.

The additional amount of hydrogen is the amount of hydrogen required to fulfill the hydrogen protection time for the duration of the stopover, such that the hydrogen protection time created by the first hydrogen refill does not expire during the stopover. Determining the additional amount of hydrogen may include determining a number of hydrogen refills required to prolong the hydrogen protection time, created by the first hydrogen refill, for the duration of the stopover. The number of required hydrogen refills may be two, three, four, or in some cases more than four refills.

In some examples, the control system 40 may be preconfigured to control the hydrogen storage device 30 to provide a certain predetermined amount of hydrogen at each refill, i.e. the amount of hydrogen required for each refill would be preconfigured. Accordingly, based on the number of refills required, a total amount of hydrogen required for refills can be determined.

At **block 424,** an expected cost of the additional amount of hydrogen and an expected cost of degradation of the fuel cell system due to a subsequent air-to-air start of the fuel cell system are compared. In some cases, it may be determined that an air-to-air start may be allowed to occur, i.e. if the hydrogen protection time is allowed to expire, if the cost of the degradation of the fuel cell system due to the air-to-air start does not exceed the cost of hydrogen that would be consumed to avoid the possible air-to-air start. Thus, the processing at block 424 may be performed so that the cost of hydrogen consumption is balanced with what is acceptable as a degradation cost of the fuel cell system. This is performed to determine whether it is reasonable to perform one or more hydrogen refills and thus spend hydrogen gas, or whether, given the circumstances, it is more reasonable to abstain from performing a hydrogen refill and accept a risk of an air-to-air start.

The control system 40 may determine the expected cost of the additional amount of hydrogen that would be spent on hydrogen refills after the first refill in dependence on the required amount of the hydrogen, costs associated with hydrogen purchase, storage and/or other factors. The expected cost of the additional amount of hydrogen may be determined, e.g., based on a price at which the hydrogen was refueled last time, considering that the hydrogen prices vary. Depending on the price at which the fuel cell vehicle was refueled last time, it may be determined whether it is reasonable, in terms of costs, to perform a number of refills determined to be required to sufficiently extend the hydrogen protection time. The number of the required hydrogen refills will depend on the estimated duration of the stopover of the vehicle, such that a larger number of refills would be required for a longer stopover of the vehicle.

In some cases, the control system 40 may consider an amount of hydrogen currently in a hydrogen tank, e.g. hydrogen storage device 30 (FIG. 2), possibly in combination with a distance to a hydrogen refueling station or another hydrogen fuel source, in determining the expected cost of the additional amount of hydrogen required for hydrogen refills. For example, the vehicle may be stopped at a location that is far removed from a location of the closest hydrogen refueling station or another location where hydrogen can be acquired for refueling the vehicle, e.g., when the hydrogen tank(s) of the vehicle are replaceable and hydrogen may need to be delivered to the vehicle. In such cases, the control system may consider this factor as increasing the estimated cost of the additional amount of hydrogen, since hydrogen is also required for normal operation of the fuel cell system once the vehicle is started. In some examples, if the current amount of hydrogen in the vehicle hydrogen tank is below a certain threshold amount and if a distance to a hydrogen refueling station is greater than a certain threshold distance, the control system may determine, e.g. in combination with other factors such as the duration of the vehicle stopover, that the expected cost of the additional amount of hydrogen is higher than the expected cost of degradation of the fuel cell system.

The comparison at block 424 considers a need to perform one or more subsequent hydrogen refills, along with the associated cost of the hydrogen, versus cost savings arising from preventing the degradation.

In some examples, the cost of degradation of the fuel cell system may be defined as a cost of degradation of an SoH of the fuel cell system. The SoH of the fuel cell system may be defined as a remaining lifetime of the fuel cell system. For example, the SoH may be expressed as percentage of the remaining lifetime of the fuel cell system. The cost of degradation of the fuel cell system may be expressed, e.g., as a decrease in a percentage of the remaining lifetime of the fuel cell system. The cost of degradation of the fuel cell system may be expressed in other ways.

The processing at block 424 may also depend on a state of health of the fuel cell system. For example, if the fuel cell system's state of health is close to 100%, it may be acceptable to allow for some degradation of the fuel cell system while saving a costs of hydrogen consumption. As another example, if the fuel cell system has a state of health that is below a threshold value 50% or another value, a decision may automatically be made to accept the costs of the consumption of the additional hydrogen while not further decreasing the state of health of the fuel cell system. In some examples, the opposite strategy may be taken, such that a cost of degradation of the fuel cell system may be higher when the fuel cell system's state of health is higher, e.g., 80% or above 80%.

In examples herein, when the number of hydrogen refills that are estimated to be required to fulfill the increased hydrogen protection time is above a certain threshold number of hydrogen refills, it may be determined that the expected cost of the additional amount of hydrogen exceeds the expected cost of degradation of the fuel cell system due to the subsequent air-to-air start of the fuel cell system. In such cases, preventing an air-to-air start, by one or more hydrogen refills and thus consuming hydrogen, may not be justified. In other words, the cost of the hydrogen consumption may be estimated to be excessively high, and a cost of degradation from the air-to-air start of the fuel cell system may be lower and may thus be acceptable. No hydrogen refills may thus be performed.

At decision **block 426,** it may be determined whether the expected cost of the additional amount of hydrogen is lower than the expected cost of degradation of the fuel cell system due to the subsequent potential air-to-air start of the fuel cell system. In other words, the processing at block 426 determines whether the increased hydrogen consumption cost is smaller than the degradation cost due to the damaging art-to-art restart of the fuel cell system. If this is the case, i.e. the expected cost of the additional amount of hydrogen is lower than the expected cost of degradation of the fuel cell system due to the subsequent air-to-air start of the fuel cell system, the process 400 follows to block 428 where it is decided that it is beneficial to extend the hydrogen protection time. The decision made by the process 400, that it is beneficial to extend the hydrogen protection time, may comprise determining, at decision block 306 of FIG. 3A, that it is beneficial to extend the hydrogen protection time, upon which the process 300 follows to block 310 as shown in FIG. 3A.

At **block 430,** responsive to determining that the expected cost of the additional amount of hydrogen is not smaller e.g. greater than the expected cost of degradation of the fuel cell system due to the subsequent air-to-air start of the fuel cell system, the control system determines that it is not beneficial to extend the hydrogen protection time. The decision made by the process 400 that it is not beneficial to extend the hydrogen protection time comprises determining, at decision block 306 of FIG. 3A, that the hydrogen protection time is not to be extended, upon which the process 300 follows to block 308 as shown in FIG. 3A.

The processing at blocks 408, 410, 412, 414, 416, 418, 420, 422, 424, 426, 428, and 430 of FIG. 4 may be performed as part of processing at block 306 of FIG. 3A.

To perform the method steps described herein, the control system 40 may be configured to perform the processing described in connection with FIGs. 3A, 3B and 4, and/or any other examples in accordance with aspects of the present disclosure. The control system 40 may, for example, have a configuration as depicted in **FIG. 2****.**

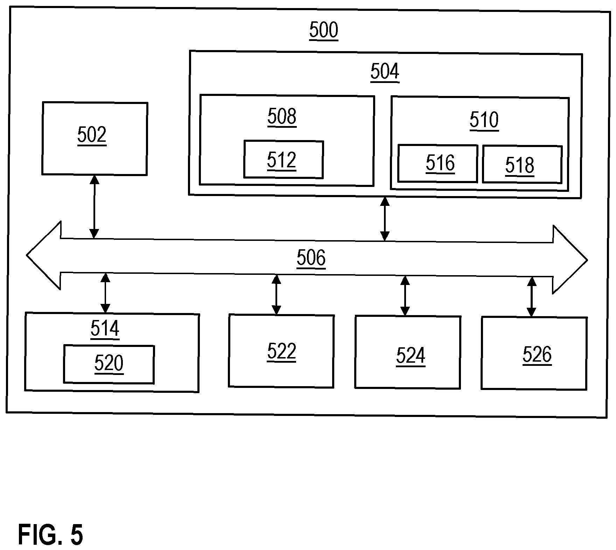

**FIG. 5** is a schematic diagram of a computer system **500** for implementing examples disclosed herein. In some examples, the control system 40 may be implemented as the computer system 500. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit, or to another display. The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method (300) for controlling operation of a fuel cell system (20) of a fuel cell vehicle (10), the fuel cell system (20) comprising a fuel cell stack (22) comprising an anode side (24) and a cathode side (26), and a hydrogen storage device (30) configured to store hydrogen fuel supplied to the anode side of the fuel cell stack (22), the method comprising:
estimating (304) an expected duration of a shutdown of the fuel cell system when the vehicle (10) is shut down;
in response to determining that a hydrogen protection time at the anode side (24) is to be extended during the shutdown of the fuel cell system, determining (310) a time until a next freeze preparation of the fuel cell system;
in response to determining (312) that the expected duration of the shutdown of the fuel cell system is shorter than the time until the freeze preparation, enabling (314) a hydrogen refill at the anode side (24) to extend the hydrogen protection time; and
in response to determining (312) that the expected duration of the shutdown of the fuel cell system is longer than the time until the freeze preparation, and further in response to determining (316) that power produced by the fuel cell system during a cathode oxygen depletion to be performed after the freeze preparation cannot be supplied to at least one power consumer, disabling (328) the hydrogen refill.

2. The method of claim 1, wherein the expected duration of the shutdown of the fuel cell system is determined based on one or more of a presence of a person in the vehicle while the vehicle is shut down, a duration of a shutdown of the vehicle, current ambient conditions, ambient conditions during the expected duration of the shutdown of the fuel cell system, and historical data related to history of operation of the vehicle and the fuel cell system.

3. The method of claim 1 or claim 2, wherein the time until the next freeze preparation of the fuel cell system is determined based on one or more of a duration of a shutdown of the vehicle, ambient conditions during the shutdown of the vehicle, a location of the vehicle, and properties of a thermal management system of the fuel cell system.

4. The method of any one of claims 1 to 3, further comprising, in response to determining that the expected duration of the shutdown of the fuel cell system is longer than the time until the freeze preparation and further in response to determining that power produced by the fuel cell system during the cathode oxygen depletion can be supplied to the at least one power consumer, enabling (322) the hydrogen refill.

5. The method of any one of claims 2 to 4, wherein the determining (316) that the power produced by the fuel cell system during the cathode oxygen depletion at the cathode side can be supplied to the at least one power consumer comprises:
determining (320) whether an energy storage system, ESS, (12) of the vehicle is able to store the power produced by the fuel cell system during the cathode oxygen depletion; and
in response to determining that the ESS is able to store the power produced by the fuel cell system during the cathode oxygen depletion, enabling (322) the hydrogen refill.

6. The method of claim 5, further comprising:
in response to determining that the ESS is not able to store the power produced by the fuel cell system during the cathode oxygen depletion, determining (324) whether the vehicle is coupled to a grid (60) and can supply the power produced by the fuel cell system during the cathode oxygen depletion to the grid (60); and
in response to determining that the vehicle is coupled to the grid and can supply the power produced by the fuel cell system during the cathode oxygen depletion to the grid, enabling (322) the hydrogen refill.

7. The method of claim 6, further comprising:
in response to determining that the vehicle is not coupled to the grid and/or cannot supply the power produced by the fuel cell system during the cathode oxygen depletion to the grid, determining (326) whether the power produced by the fuel cell system during the cathode oxygen depletion can be supplied to a brake resistor (54) or an auxiliary power consuming device (56) of the vehicle; and
in response to determining that the power produced by the fuel cell system during the cathode oxygen depletion can be supplied to the brake resistor or the auxiliary power consuming device of the vehicle, enabling (322) the hydrogen refill.

8. The method of any one of claims 1 to 7, comprising determining (306), at least based on the expected duration of the shutdown of the fuel cell system, whether the hydrogen protection time is to be extended during the shutdown of the fuel cell system.

9. The method of claim 8, wherein the determining (306) is performed based on a comparison of an expected cost of an additional amount of hydrogen required for extending the hydrogen protection time and an expected cost of degradation of the fuel cell system due to a subsequent air-to-air start of the fuel cell system.

10. The method of claim 9, comprising determining that the hydrogen protection is not to be extended by determining that the expected cost of the additional amount of hydrogen is greater than the expected cost of degradation of the fuel cell system due to the subsequent air-to-air start of the fuel cell system.

11. A control system (40, 500) configured to control a fuel cell system (20) of a fuel cell vehicle (10), the control system (40) comprising processing circuitry (41, 502), and the fuel cell system (20) comprising a fuel cell stack (22) comprising an anode side (24) and a cathode side (26), the processing circuitry (41, 502) being configured to:
estimate an expected duration of a shutdown of the fuel cell system when the vehicle is shut down;
in response to determining that a hydrogen protection time at the anode side is to be extended during the shutdown of the fuel cell system, determine a time until a next freeze preparation of the fuel cell system;
in response to determining that the expected duration of the shutdown of the fuel cell system is shorter than the time until the freeze preparation, enable a hydrogen refill at the anode side to extend the hydrogen protection time; and
in response to determining that the expected duration of the shutdown of the fuel cell system is longer than the time until the freeze preparation, and further in response to determining that power produced by the fuel cell system during a cathode oxygen depletion to be performed after the freeze preparation cannot be supplied to at least one power consumer, disabling the hydrogen refill, wherein the at least one power consumer comprises one or more of an energy storage system, ESS, of the vehicle, a grid, and a brake resistor or an auxiliary power consuming device of the vehicle.

12. The control system (40, 500) of claim 11, wherein the processing circuitry (41, 502) is configured to perform the method of any one of claims 2 to 10.

13. A fuel cell vehicle (10) comprising the control system (40) of claim 11 or claim 12.

14. A computer program product comprising instructions, which, when executed by processing circuitry, cause the processing circuitry to perform the method of any one of claims 1 to 10.

15. A tangible computer-readable storage medium, having stored thereon a computer program product comprising instructions which, when executed by processing circuitry, cause the processing circuitry to perform the method of any one of claims 1 to 10.
